# EUROPÄISCHE PATENTANMELDUNG

(11) **EP 4 775 496 A1**
(43) Veröffentlichungstag der Anmeldung: **15.07.2026**
(21) Anmeldenummer: 26150721.4
(22) Anmeldetag: 08.01.2026
(51) Int. Cl.: B64G 1/68, B64G 4/00

(54) **DETEKTIONSSYSTEM, WELTRAUMFLUGKÖRPER SOWIE VERFAHREN ZUR DETEKTION VON WELTRAUMMÜLL**

(30) Priorität: 08.01.2025 DE 102025100581
(71) Anmelder: Deutsches Zentrum für Luft- und Raumfahrt e.V., 53227 Bonn (DE)
(72) Erfinder: Fexer, Sebastian, 28359 Bremen (DE)
(74) Vertreter: REHBERG HÜPPE + PARTNER

(57) **Zusammenfassung**

Die Erfindung betrifft ein Detektionssystem (1) zur Erfassung von Weltraummüll, wobei das Detektionssystem (1) einen Detektionskörper (2) mit einer sich bei Kollisionen mit Weltraummüll verändernden Detektionsfläche (3) und eine Veränderung der Detektionsfläche (3) optisch erfassende Detektionseinrichtung (4) aufweist, wobei das Detektionssystem (1) eine Antriebseinrichtung (5) und eine Führungseinrichtung (6) aufweist, wobei die Antriebseinrichtung (5) eingerichtet ist, um die Detektionseinrichtung (4) an und entlang der Führungseinrichtung (6) relativ zu der Detektionsfläche (3) zu verlagern, um während der Verlagerung einen Erfassungsbereich der Detektionseinrichtung (4) zeitlich nacheinander auf in eine Verlagerungsrichtung (s) aufeinanderfolgende Flächenteilbereiche (7, 8, 9, 10) der Detektionsfläche (3) zu richten. Um Weltraummüll-Einschläge, insbesondere mehrmalige Einschläge auf denselben Teilbereich der Detektionsfläche, präzise detektieren zu können, wird vorgeschlagen, dass der Detektionseinrichtung (4) ein Spektralfilter und/oder eine Abschirmeinrichtung zur Abschirmung von Umgebungslicht und/oder eine Beleuchtungseinrichtung zum Beleuchten der Detektionsfläche, insbesondere mit Licht unterschiedlicher Wellenlängen und/oder aus unterschiedlichen Einfallsrichtungen, zugeordnet ist.

## Beschreibung

### TECHNISCHES GEBIET DER ERFINDUNG

Die Erfindung betrifft ein Detektionssystem zur Erfassung von Weltraummüll. Das Detektionssystem weist einen Detektionskörper mit einer sich bei Kollisionen mit Weltraummüll verändernden Detektionsfläche und eine Veränderung der Detektionsfläche optisch erfassende Detektionseinrichtung auf.

Daneben betrifft die Erfindung einen Weltraumflugkörper mit einem Detektionssystem zur Detektion von Weltraummüll.

Weiterhin betrifft die Erfindung ein Verfahren zur Detektion von Weltraummüll mittels eines Detektionssystems, wobei eine Detektionseinrichtung eine durch eine Kollision mit Weltraummüll hervorgerufene Veränderung einer Detektionsfläche eines Detektionskörpers detektiert.

### STAND DER TECHNIK

Beschädigungen von Solarpaneelen durch Weltraummüll wurden in der Vergangenheit eher zufällig durch Kameras detektiert, die für andere Zwecke auf Satelliten installiert waren, beispielsweise um eine korrekte Entfaltung eines Solarpaneels kontrollieren zu können. Ein Foto eines durch eine Kamera aufgenommenen Einschlags eines Weltraummüll-Teilchens in einem Solarpaneel des Erdbeobachtungssatelliten Sentinel 1-A ist abrufbar auf der Website des Deutschen Zentrums für Luft- und Raumfahrt e.V., über den Link "https://www.dlr.de/de/bilder/2017/2/einschlag-eines-weltraummuell-teilchens-im-solarpanel-des-erdbeobachtungssatelliten-sentinel-1-a_26851".

Das Foto erlaubt keine zuverlässige Bestimmung des Einschlagsortes auf dem Solarpaneel und damit auch keine präzisen Rückschlüsse auf die Größe und/oder Art des kollidierenden Weltraummülls.

Daneben existieren Erfassungssysteme für Weltraummüll, die in Form elektrischer Leiter oder elektrischer Schichten in eine Antenne oder ein Solarpaneel integriert sind.

EP 3 345 840 A1 und EP 3 345 841 A1 offenbaren ein Erfassungssystem für Weltraummüll, welches auf einem Flugkörper installierbar ist. Eine Erfassungseinrichtung des Erfassungssystems weist mindestens eine Planarantenne auf, die eine Sandwichstruktur aus zwei leitfähigen, mit Spannung beaufschlagten Schichten aufweist, die durch eine nicht leitfähige Schicht getrennt sind. Durch einen Aufprall von Weltraummüll auf die Planarantenne wird zumindest die äußere leitfähige Schicht mechanisch verändert, wodurch ein elektrischer Parameter wie eine Kapazität eines Kondensators oder eine Impedanz der Planarantenne eine messbare Änderung erfährt, die auf einen Aufprall und eine Größe des aufprallenden Objekts schließen lässt.

DE 10 2012 000 260 B3, auch veröffentlicht als US 8 593 165, offenbart einen Solargenerator für Raumfahrzeuge oder Satelliten. Der Solargenerator weist ein Solarpaneel mit einer Solarzellenschicht auf, die eine Vielzahl von flächig nebeneinander angeordneten Solarzellen aufweist. Eine der Oberseite der Solarzellenschicht abgewandte Seite der Solarzellenschicht weist eine erste Detektorschicht aus einem isolierenden Material mit einer ersten Ebene aus darin parallel angeordneten ersten elektrischen Leitern und mit einer zweiten Ebene aus quer zu den ersten elektrischen Leitern angeordneten zweiten elektrischen Leitern auf. Jeder Solarzelle sind ein erster und zweiter Leiter zugeordnet, die in dem Solarpaneel im Bereich unterhalb der jeweiligen Solarzelle verlaufen. Dadurch kann ein erstes Auswertemittel einen Ausfall einzelner oder mehrerer Solarzellen ermitteln. Ein zweites Auswertemittel, das mit dem ersten Auswertemittel und den ersten und zweiten elektrischen Leitern verbunden ist, ist eingerichtet, um im Falle eines von dem ersten Auswertemittel festgestellten Ausfalls eine Prüfung einer körperlichen Integrität der ersten und zweiten Leiter mittels einer Analyse eines elektrischen Zustands der ersten und zweiten elektrischen Leiter durchzuführen.

Diese Erfassungssysteme und -verfahren zur Detektion von Weltraummüll erlauben zwar eine genaue Ortsauflösung des Einschlagsortes von Weltraummüll auf einer Detektionsfläche, erfordern jedoch eine besondere Struktur aus in eine Antenne oder ein Solarpaneel integrierten elektrischen Leitern bzw. Schichten. Nachteilig ist weiterhin, dass der mit Weltraummüll kollidierte Teilbereich der Detektionsfläche nicht mehr zur Detektion zur Verfügung steht, sobald die elektrischen Leiter einmal beschädigt wurden.

US 2014 / 0 300 737 A1 offenbart ein Erfassungssystem für Weltraummüll, mit einem an einen Rumpf eines Satelliten oder Raumfahrzeugs angepassten Schienensystem und einer optischen Detektionseinrichtung, welche entlang des Schienensystems verfährt, um einen Zustand einer Oberfläche des Satelliten oder Raumfahrzeugs zu detektieren. In Abhängigkeit von der Form des Schienensystems und der Form, Position und Orientierung der zu detektierenden Oberfläche ändern sich ein Detektionswinkel und ein Abstand zwischen der Detektionseinrichtung und der Oberfläche. Dies führt je nach der aktuellen Position der Detektionseinrichtung zu unterschiedlichen Lichtverhältnissen auf dem zu detektierenden Oberflächenteilbereich, was die Vergleichbarkeit und Zuverlässigkeit der Detektionsergebnisse beeinträchtigen kann.

### AUFGABE DER ERFINDUNG

Der Erfindung liegt die Aufgabe zugrunde, ein Detektionssystem, einen Weltraumflugkörper sowie ein Verfahren zur Detektion von Weltraummüll zu schaffen, durch welche eine präzise Ortsauflösung von Weltraummüll-Einschlägen auf einem Detektionskörper sowie eine Detektion auch von mehrmaligen Einschlägen auf denselben Teilbereich einer Detektionsfläche möglich ist.

### LÖSUNG

Die Aufgabe der Erfindung wird mit den Merkmalen der unabhängigen Patentansprüche gelöst. Weitere Ausgestaltungen sind den abhängigen Patentansprüchen zu entnehmen.

### BESCHREIBUNG DER ERFINDUNG

Die Erfindung betrifft ein Detektionssystem zur Erfassung von Weltraummüll, wobei das Detektionssystem einen Detektionskörper mit einer sich bei Kollisionen mit Weltraummüll verändernden Detektionsfläche und eine Veränderung der Detektionsfläche optisch erfassende Detektionseinrichtung aufweist.

Erfindungsgemäß weist das Detektionssystem eine Antriebseinrichtung und eine Führungseinrichtung auf. Die Antriebseinrichtung ist eingerichtet, um die Detektionseinrichtung an und entlang der Führungseinrichtung relativ zu der Detektionsfläche zu verlagern, um während der Verlagerung einen Erfassungsbereich der Detektionseinrichtung zeitlich nacheinander auf in eine Verlagerungsrichtung der Detektionseinrichtung aufeinanderfolgende Flächenteilbereiche der Detektionsfläche zu richten.

Erfindungsgemäß ist oder sind der Detektionseinrichtung ein Spektralfilter und/oder eine Abschirmeinrichtung zur Abschirmung von Umgebungslicht und/oder eine Beleuchtungseinrichtung zum Beleuchten der Detektionsfläche, insbesondere mit Licht unterschiedlicher Wellenlänge und/oder aus unterschiedlichen Einfallsrichtungen und/oder mit diffusem oder gerichtetem Licht, zugeordnet.

Durch diese Maßnahmen können definierte Beleuchtungsbedingungen geschaffen werden und dadurch insbesondere die wellenlängenabhängigen und/oder winkelabhängigen und/oder polarisationsabhängigen Reflexionseigenschaften der Detektionsfläche genutzt werden, um durch Einschläge veränderte Oberflächeninformationen der Detektionsfläche besser erkennen zu können und sichtbar zu machen.

Bei Verwendung eines Spektralfilters und damit wellenlängenselektiver Beleuchtung der Detektionsfläche und/oder wellenlängenselektiver Detektion, ist es gegebenenfalls möglich, Merkmale der Detektionsfläche, zum Beispiel Bruchkanten, welche durch eine Kollision verursacht sind, besser zu detektieren bzw. zu erkennen.

Die Beleuchtungseinrichtung kann beispielsweise durch diffuses oder gerichtetes Licht, verschiedene Wellenlängen und/oder verschiedene Beleuchtungsrichtungen, dieselbe Funktion erfüllen, nämlich Merkmale wie Bruchkanten durch ein wellenlängen- und/oder winkelabhängiges Reflexions- und/oder Streuverhalten besser detektierbar und/oder erkennbar zu machen. Eine Beleuchtungseinrichtung kann schließlich vorteilhaft sein, um insbesondere in einem fotografisch anspruchsvollen Weltraumumfeld Belichtungsprobleme zu beseitigen oder zumindest zu verringern, beispielsweise wenn einzelne oder alle Flächenteilbereiche der Detektionsfläche sehr hell oder sehr dunkel sind. Zudem kann die Beleuchtungseinrichtung zur Strahlformung des von der Beleuchtungseinrichtung emittierten Lichts optische Elemente wie Linsen, Spiegel und/oder Gitter aufweisen.

Alternativ oder zusätzlich kann der Detektionseinrichtung eine Abschirmeinrichtung zugeordnet sein, in welche die Detektionseinrichtung permanent aufgenommen ist oder wahlweise aufgenommen werden kann. Dadurch kann beispielsweise Fremdlicht, welches die Detektion erschwert, ausgeschlossen werden. Insbesondere kann die Abschirmeinrichtung die Detektionseinrichtung und/oder Flächenteilbereiche der Detektionsfläche abschatten, um definierte Beleuchtungsbedingungen zu schaffen.

Zur Verbesserung des Detektionsergebnisses kann schließlich die Recheneinrichtung selbst, welche die Daten der Detektionseinrichtung empfängt, eine weitergehende digitale Signal- und/oder Bildverarbeitung vornehmen, insbesondere mithilfe von Mustererkennungsalgorithmen oder Darstellungsoptimierungen.

Vorgeschlagen wird, die Oberfläche eines Detektionskörpers optisch auf Weltraummülleinschläge zu prüfen. Es ist dabei nicht erforderlich, dass der Detektionskörper auf besondere Art und Weise durch integrierte Strukturen ausgebildet ist, beispielsweise durch integrierte elektrische Leiter oder elektrische Schichten. Zudem ist es durch die Antriebseinrichtung, welche die Detektionseinrichtung relativ zu der Detektionsfläche verlagert, möglich, sehr große Detektionskörper zu überwachen, insbesondere Detektionskörper mit einer Detektionsfläche, deren Größe deutlich über den Erfassungsbereich der unbewegten Detektionseinrichtung hinausgeht.

Die Antriebseinrichtung ist ausgestaltet, um die Detektionseinrichtung nach der Art eines Scanners an der zu detektierenden Detektionsfläche vorbeizubewegen beziehungsweise über diese hinwegzubewegen, so dass in Verlagerungsrichtung der Detektionseinrichtung aufeinanderfolgende Flächenteilbereiche der Detektionsfläche zeitlich nacheinander detektiert werden. Die Detektionseinrichtung ist damit eingerichtet, um zeitlich nacheinander optische Oberflächeninformationen von benachbarten Flächenteilbereichen aufzunehmen und diese mithilfe einer Recheneinrichtung später zu einem vollständigen Datensatz, insbesondere einem Bild, der Detektionsfläche zusammenzusetzen und zu analysieren.

Je nach der Geschwindigkeit, mit welcher die Antriebseinrichtung die Detektionseinrichtung relativ zu der Detektionsfläche verlagert, kann ein vollständiger Datensatz mehr oder weniger schnell erstellt werden. Die Antriebseinrichtung kann dabei derart gesteuert sein, dass die Detektionseinrichtung kontinuierlich oder nur in vordefinierten zeitlichen Intervallen an der Detektionsfläche entlanggefahren wird. Beispielsweise kann die Detektionseinrichtung während eines bestimmten Zeitraums an einem bestimmten Ort der Detektionsfläche verweilen, um die Detektionsfläche zu detektieren. Dadurch kann sich gegebenenfalls eine bessere Bildqualität, insbesondere mit verbessertem Kontrast oder verbesserter Auflösung, ergeben. Während der kontinuierlichen Verlagerung oder einem zeitlich begrenzten Verlagerungsintervall kann die Verlagerungsgeschwindigkeit konstant sein oder variieren. Eine Geschwindigkeitsänderung der Antriebseinrichtung kann beispielsweise dann ausgelöst werden, wenn die Detektionseinrichtung und/oder die Recheneinrichtung eine Unregelmäßigkeit der Detektionsfläche erkennt und/oder wenn ein zusätzlicher Sensor des Detektionssystems oder ein mit dem Detektionssystem kooperierender externer Sensor ein Triggersignal ausgibt. Ein solcher zusätzlicher Sensor kann beispielsweise ein Piezosensor, ein Beschleunigungssensor oder ein anderer Sensor sein, welcher einen Parameter detektiert, der auf einen Weltraummülleinschlag hindeutet.

Das Detektionssystem kann somit besonders schnell und unmittelbar Einschläge von Weltraummüll auf der Detektionsfläche erkennen. Sofern die Detektionseinrichtung die Detektionsfläche bzw. Teilbereiche der Detektionsfläche in definierten zeitlichen Abständen abscannt und/oder mit konstanter Geschwindigkeit relativ zu der Detektionsfläche verfährt, kann zusätzlich eine Dichte von Weltraummüll in der Umgebung ermittelt werden.

Ein besonderer Vorteil der Verlagerung der Detektionseinrichtung mittels der Antriebseinrichtung ist, dass im Gegensatz zu fest installierten Detektionseinrichtungen keine Winkelverzerrungen und/oder andere Bildfehler dadurch entstehen, dass unterschiedliche Flächenteilbereiche der Detektionsfläche aus unterschiedlichen Winkeln detektiert werden. Insbesondere kann erreicht werden, dass durch eine stets identische relative Orientierung der Detektionseinrichtung relativ zu den zu detektierenden Flächenteilbereichen die gleichen geometrischen Verhältnisse und bevorzugt auch gleiche oder sehr ähnliche Lichtverhältnisse herrschen.

Dadurch, dass die durch Kollision mit einem Weltraumflugkörper verursachten Veränderungen der Detektionsfläche unmittelbar optisch gemessen werden, ist eine schnelle und zuverlässige Identifikation der Einschläge möglich, ohne dass über andere Parameteränderungen, beispielsweise Änderungen von Widerständen oder Spannungsverhältnissen in elektrischen Leitern beziehungsweise Schichten, auf einen Einschlag zurückgeschlossen werden muss. Mehrfacheinschläge von Weltraummüll auf denselben Teilbereich der Detektionsfläche sind zudem quasi unbegrenzt detektierbar.

Vorzugsweise ist vorgesehen, dass die Führungseinrichtung an dem Detektionskörper angeordnet ist. Dadurch wird die Verlagerung der Detektionseinrichtung bei Betrieb der Antriebseinrichtung geführt, wodurch stets eine definierte Zuordnung zwischen dem Ort der Detektionseinrichtung bzw. dessen Erfassungsbereich und dem aktuell detektierten Ort bzw. Flächenteilbereich auf der Detektionsfläche gegeben ist.

Die Führungseinrichtung kann auf unterschiedliche Art und Weise ausgestaltet sein, beispielsweise nach der Art einer Führungsnut, einer Führungsschiene und/oder einer Führungskulisse. Die Führungseinrichtung kann Teil des Detektionskörpers sein oder beispielsweise mittels einer zusätzlichen Halterung an dem Detektionskörper befestigt sein. Die Art und Weise der Befestigung kann bevorzugt einen stets konstanten Abstand und/oder Winkel zwischen der Detektionseinrichtung und der Detektionsfläche vorgeben, um den Erfassungsbereich der Detektionseinrichtung auf einen bevorzugt vordefinierten Flächenteilbereich der Detektionsfläche zu richten.

Gemäß einer besonderen Ausführung kann die Führungseinrichtung zwei gegenüberliegenden Randbereichen des Detektionskörpers zugeordnete Führungselemente aufweisen, entlang und zwischen welchen die Detektionseinrichtung verfahrbar ist. Die Führungselemente können an den sich bevorzugt parallel zu der Verlagerungsrichtung der Detektionseinrichtung erstreckenden Randbereichen des Detektionskörpers so ausgebildet und/oder angeordnet sein, dass die Detektionseinrichtung von beiden gegenüberliegenden Randbereichen bevorzugt gleichsam geführt und gestützt wird. Die Führungselemente können ein integraler Bestandteil des Detektionskörpers selbst sein, beispielsweise einstückig mit dessen Randbereichen ausgebildet sein und/oder an diesen angeformt sein. Somit können die Randbereiche selbst als Führungsschiene dienen oder derartige oder anders ausgebildete Führungselemente tragen. Besonders vorteilhaft ist eine Ausführung, bei welcher die Detektionseinrichtung mithilfe der Führungseinrichtung symmetrisch gestützt wird und ohne Verkanten oder Überwinden besonderer Reibkräfte relativ zu dem Detektionskörper verlagerbar ist.

Die Antriebseinrichtung kann einen Linearmotor, bevorzugt einen Linearschrittmotor, aufweisen. Alternativ zu einem Linearmotor können andere Arten von Motoren eingesetzt werden, insbesondere rotierende Motoren, um in Abhängigkeit von einem zeitabhängigen und/oder ereignisabhängigen Signal eine Verlagerung der Detektionseinrichtung zu bewirken. Grundsätzlich ist es möglich, entweder Schrittmotoren oder kontinuierlich arbeitende Motoren zu verwenden. Des Weiteren kann die Antriebseinrichtung einen pneumatisch oder hydraulisch arbeitenden Aktor aufweisen. Die Antriebseinrichtung ist eingerichtet, um die Detektionseinrichtung kontinuierlich und/oder schrittweise relativ zu der Detektionsfläche beziehungsweise entlang der Führungseinrichtung zu verlagern. Weiterhin kann die Verlagerung situativ und/oder zeitabhängig erfolgen.

Gemäß einer Ausführungsform kann vorgesehen sein, dass eine kontinuierliche Verlagerung der Detektionseinrichtung während voneinander getrennter, zeitlich vorgegebener Zeitintervalle stattfindet. Zwischen den Zeitintervallen kann die Detektionseinrichtung relativ zu der Detektionsfläche stillstehen. Die Zeitintervalle, in welchen die Verlagerung stattfindet, sind somit durch eine Pause / einen Stillstand unterbrochen.

Weiterhin kann die Antriebseinrichtung eingerichtet sein, um die Detektionseinrichtung zu bestimmten Zeitpunkten an in Verlagerungsrichtung aufeinanderfolgende Flächenteilbereiche der Detektionsfläche zu verlagern und dort dann eine gewisse Zeitspanne zu ruhen.

Gemäß einer weiteren Ausführungsform kann vorgesehen sein, dass die Antriebseinrichtung mittels einer Recheneinrichtung und/oder Steuereinrichtung so gesteuert wird, dass eine Verlagerung der Detektionseinrichtung lediglich bei einem Verdacht eines Einschlags veranlasst wird. Dieser Verdacht kann beispielsweise auf der Detektion eines Merkmals durch einen anderen, schnelleren Sensor beruhen, beispielsweise einen Piezosensor. Der zusätzliche Sensor kann Teil des Detektionssystems oder ein externer Sensor sein, welcher funktional mit der hier beschriebenen Detektionseinrichtung verknüpft ist. Ein eine Verlagerung der Detektionseinrichtung auslösendes Ereignis kann insbesondere durch einen Sensor detektiert werden, welcher eine Erschütterung oder einen Impuls wahrnimmt. Bevorzugt ist dieser zusätzliche Sensor gleichfalls geeignet, um Informationen über einen Zeitpunkt eines Einschlags von Weltraummüll zu liefern.

Durch den zusätzlichen Sensor und die mit dessen Hilfe gewonnenen Zeitinformationen über Einschläge kann das Detektionssystem zur Erfassung einer Dichte von Weltraummüll ausgebildet sein. Sofern auf der Detektionsfläche mehrere Einschläge zu identischen oder verschiedenen Zeitpunkten detektiert werden können, kann daraus in besonders vorteilhafter Art und Weise auf eine Population von Weltraummüllteilchen in der Umgebung des Detektionssystems geschlossen werden. Dabei kann beispielsweise die Dichte von Weltraummüll und/oder die Zusammensetzung von Weltraummüll aus verschiedenen Unterarten erkannt werden.

Eine Dichte von Weltraummüll in der Umgebung kann alternativ ohne einen zusätzlichen Sensor ermittelt werden, sofern die Detektionseinrichtung die Detektionsfläche bzw. Teilbereiche der Detektionsfläche in definierten zeitlichen Abständen abscannt und/oder mit konstanter Geschwindigkeit relativ zu der Detektionsfläche verfährt.

Gemäß einer besonders bevorzugten Ausführungsform weist die Detektionseinrichtung einen Zeilensensoren auf, der quer zu seiner Längserstreckung relativ zu der Detektionsfläche verlagerbar ist. Ein solcher Zeilensensor kann insbesondere ein mit einer überwiegenden Längserstreckung ausgebildeter CCD-Sensor oder CMOS-Sensor sein, welcher aus in Längserstreckung aufeinanderfolgenden Sensorelementen oder Sensorbereichen besteht. Alternativ ist es möglich, eine längserstreckte Photodioden-Zeile zu verwenden. Alternativ kann die Detektionseinrichtung anstatt einer einzelnen Sensorzeile mehrere Sensorzeilen aufweisen und somit als ein Sensor-Array ausgebildet sein, welches Sensorelemente oder Sensorbereiche in benachbarten Zeilen und Spalten des Arrays aufweist. Bevorzugt ist das Maß der Längserstreckung des Zeilensensors genauso groß oder mindestens so groß wie die Ausdehnung der Detektionsfläche quer zu der Verlagerungsrichtung der Detektionseinrichtung. Somit ragt der Zeilensensor über die gesamte Breite der Detektionsfläche und kann während seiner Verlagerung aufeinanderfolgende Teilbereiche der Detektionsfläche abscannen, so dass nach einer, beispielsweise durch die Länge einer Führungseinrichtung vorgegebenen, vollständigen Verlagerung die gesamte Detektionsfläche abgescannt ist. Die Daten können anschließend mittels einer Recheneinrichtung zu einem gesamten Datensatz zusammengesetzt werden, wobei zeitlich nacheinander aufgenommene Datensätze des Zeilensensors beispielsweise zu einem Gesamtbild der Detektionsfläche zusammengesetzt werden können. Dabei funktioniert die Detektionseinrichtung wie ein Flachbettscanner, welcher optische Oberflächeninformationen scannt, die mittels einer Recheneinrichtung zu einem vollständigen Datensatz, insbesondere zu einem Bild, zusammengesetzt werden können.

Zudem kann vorgesehen sein, dass das Detektionssystem eine der Detektionseinrichtung zugeordnete Schutzabdeckung aufweist, unter welche die Detektionseinrichtung verlagerbar ist. Insbesondere kann die Detektionseinrichtung bei Nichtgebrauch unter die Schutzabdeckung verlagerbar sein. Die Schutzabdeckung ist ausgebildet, um die darin aufgenommene Detektionseinrichtung vor äußeren Einflüssen zu schützen, insbesondere wenn gerade keine Detektionsaufgabe erfüllt wird und die Detektionseinrichtung beispielsweise ausgeschaltet oder in einem Stand-by-Modus ist.

Um den Ort eines Einschlags von Weltraummüll auf der Detektionsfläche definieren zu können, kann vorgesehen sein, dass der Detektionskörper, insbesondere die Detektionsfläche, eine Skala und/oder eine Positionsmarkierung zur Definition eines Ortes auf der Detektionsfläche aufweist. Gemäß einer besonders einfachen Ausführungsform ist auf der Detektionsfläche oder auf einem der Detektionsfläche naheliegenden Bereich des Detektionskörpers eine Skala aufgebracht, bevorzugt in Verlagerungsrichtung. Die Skala kann entweder von der Detektionseinrichtung selbst bei Detektion des zugeordneten Flächenteilbereichs detektiert werden oder anderweitig von einem die Skala zeitgleich abfragenden Sensor. Die Information der Skala wird dem jeweils zeitgleich aufgenommenen Datensatz des Flächenteilbereiches zugeordnet.

Weiterhin können Orte auf der Detektionsfläche durch intrinsische oder zusätzlich aufgebrachte Positionsmarkierungen definiert sein, beispielsweise durch eine Rasterung, die zumindest Spalten angibt, welche parallel zu der Verlagerungsrichtung orientiert sind. Besonders bevorzugt ist der Einschlagsort auf der Detektionsfläche jedoch durch ein Ortssignal der Antriebseinrichtung definiert, beispielsweise durch eine aktuelle Position eines von einem Motor verlagerten Schlittens, welcher die Detektionseinrichtung trägt und vorwärtsbewegt.

Der Detektionskörper der Detektionseinrichtung kann vorteilhaft ein Solarpaneel sein. Bei Sonarpaneelen handelt es sich um zumeist großflächige Einrichtungen an Weltraumflugkörpern. Dies bietet mehrere Vorteile, nämlich einerseits eine höhere Einschlagswahrscheinlichkeit, und andererseits eine gute optische Erkennbarkeit von Einschlägen aufgrund des spröden Materials der Solarpaneele. Zudem werden die Solarpaneele zumeist ohnehin auf Weltraumflugkörpern wie Satelliten benötigt, um Energie zum Betrieb des Weltraumflugkörpers beziehungsweise dessen Komponenten oder Überwachungseinrichtungen zur Verfügung zu stellen.

Solarpaneele weisen zudem üblicherweise eine charakteristische Anordnung von elektrischen Zuleitungen auf der Oberfläche auf. Diese Anordnung bzw. das daraus entstehende Muster ermöglicht eine besonders präzise Ortsbestimmung auf der Detektionsfläche.

Der Detektionskörper kann alternativ zu der Ausbildung als Solarpaneel ein anderer, vorzugsweise sehr großer und flächiger, Körper sein, beispielweise eine Antenne, ein Spiegel oder ähnliches. In diesem Fall funktioniert die Oberfläche dieser Detektionskörper ebenfalls als Detektionsfläche, welche durch eine verlagerbare Detektionseinrichtung der vorgenannten Art sukzessive abgescannt werden kann.

Neben dem zuvor beschriebenen Detektionssystem wird mit der Erfindung des Weiteren ein Weltraumflugkörper vorgeschlagen, insbesondere ein Satellit, welcher ein Detektionssystem zur Detektion von Weltraummüll aufweist. Das Detektionssystem ist erfindungsgemäß nach einer der vorhergehend beschriebenen Ausführungsformen ausgebildet. Weltraumflugkörper wie Satelliten weisen für vielerlei Zwecke ohnehin große Oberflächen auf, beispielsweise Solarpaneele zur Energieversorgung oder Antennen zur Kommunikation. Insofern dienen diese Oberflächen nicht nur als Detektionsfläche. Die Detektionsfläche bedingt somit kein zusätzliches Gewicht oder keinen zusätzlich benötigten Bauraum an dem Weltraumflugkörper.

Schließlich wird ein Verfahren zur Detektion von Weltraummüll mittels eines Detektionssystems vorgeschlagen, insbesondere mittels eines zuvor beschriebenen Detektionssystems, wobei eine Detektionseinrichtung eine durch eine Kollision mit Weltraummüll hervorgerufene Veränderung einer Detektionsfläche eines Detektionskörpers detektiert. Erfindungsgemäß wird die Detektionseinrichtung mittels einer Antriebseinrichtung an und entlang einer Führungseinrichtung relativ zu der Detektionsfläche verlagert, wobei die Detektionseinrichtung zeitlich nacheinander optische Oberflächeninformationen von in eine Verlagerungsrichtung der Detektionseinrichtung aufeinanderfolgenden Flächenteilbereichen der Detektionsfläche erfasst, wobei von der Detektionseinrichtung zu erfassende Oberflächeninformationen mittels eines Spektralfilters gefiltert werden und/oder Umgebungslicht mittels einer Abschirmeinrichtung abgeschirmt wird und/oder die Detektionsfläche mittels einer Beleuchtungseinrichtung beleuchtet wird, insbesondere mit Licht unterschiedlicher Wellenlängen und/oder aus unterschiedlichen Einfallsrichtungen.

Insbesondere kann eine Recheneinrichtung des Detektionssystems eine von der Detektionseinrichtung detektierte Oberflächeninformation empfangen und einem bestimmten Ort auf der Detektionsfläche zuweisen, wobei der bestimmte Ort zum Zeitpunkt der Detektion der Oberflächeninformation anhand eines empfangenen Positionssignals beispielsweise eines Schrittmotors der Antriebseinrichtung und/oder einer der Detektionsfläche zugeordneten Skala und/oder Positionsmarkierung ermittelt wird.

Insbesondere kann die Positionserkennung eines Einschlagsortes auf einem Flächenteilbereich der Detektionsfläche mittels der Antriebseinrichtung oder der Detektionseinrichtung zugeordneten Inkrementalgebern erfolgen, insbesondere durch eine Schrittzählung an einem Schrittmotor der Antriebseinrichtung. Alternativ oder zusätzlich können optische Markierungen in und/oder neben der Detektionsfläche ausgelesen werden. Zudem kann auch eine intrinsische Musterung oder Markierung der Detektionsfläche für eine Ortserkennung genutzt werden. Beispielsweise weisen Solarzellen eine charakteristische Durchsetzung mit elektrischen Leitern auf, durch die eine Größe eines Einschlags oder einer sonstigen Beschädigung abschätzbar wird. Schließlich sind auch die einzelnen Solarzellen eines Solarpaneels selbst üblicherweise in Reihen und Spalten angeordnet und können somit zumindest Unterteilbereiche der Detektionsfläche definieren.

Die Detektionseinrichtung kann kontinuierlich, in vordefinierten zeitlichen Abständen oder situativ durch ein vordefiniertes Ereignis ausgelöst entlang der Detektionsfläche verlagert werden, wobei die Detektionseinrichtung bei Nichtgebrauch insbesondere unter eine Schutzabdeckung verlagert wird. Besonders bevorzugt wird die Detektionseinrichtung von der Antriebseinrichtung nur dann verlagert, insbesondere aus dem Bereich unterhalb der Schutzabdeckung entfernt, wenn tatsächlich ein Anlass zur Detektion besteht. Ein derartiger Anlass kann beispielsweise durch eine zusätzliche Sensorik gemeldet werden, welche besonders schnell auf Einschlagsereignisse reagiert, beispielsweise ein Piezosensor oder Beschleunigungssensor. Insofern kann der zusätzliche Sensor ein Startsignal zum Betrieb der Antriebseinrichtung und/oder Detektionseinrichtung geben.

Zudem kann das vorgeschlagene Verfahren dazu genutzt werden, andere indirektere Messverfahren zu validieren, zu kalibrieren oder auch Messergebnisse dieser zu bewerten, zu korrelieren oder weitere Erkenntnisse zu sammeln. Derartige indirektere Messverfahren sind beispielsweise Piezoverfahren, akustische Verfahren, Detektionsverfahren zur Detektion einer Durchtrennung elektrischer Leiter, zur Plasmadetektion oder auch zur Detektion von Spannungsänderungen an Solarpaneelen oder einschlagsbedingten Abweichungen einer Lageregelung eines Weltraumflugkörpers.

Die indirekten Messverfahren werden nicht zur Charakterisierung oder Größenabschätzung der Einschläge auf der Detektionsfläche benötigt, können jedoch weitere Informationen zuliefern, beispielsweise Informationen über einen exakten Zeitpunkt des Einschlags, einen Impuls oder eine Geschwindigkeit eines einschlagenden Weltraummüllteilchens. Die Einschläge können durch das erfindungsgemäße Verfahren beziehungsweise die erfindungsgemäße Detektionseinrichtung in Verbindung mit einer Recheneinrichtung bereits unmittelbar und in hoher Auflösung sichtbar gemacht werden, sodass die exakte Einschlagssituation auf der Detektionsfläche für den Betrachter sichtbar wird. Eine Interpretation durch andere, indirekte Messverfahren ist nicht notwendig.

Insbesondere können ergänzende Messverfahren Zeitinformationen über einen Zeitpunkt eines Einschlags auf der Detektionsfläche liefern. Sofern auf der Detektionsfläche mehrere Einschläge zu identischen oder verschiedenen Zeitpunkten detektiert werden können, kann daraus in besonders vorteilhafter Art und Weise auf eine Population von Weltraummüllteilchen in der Umgebung des Detektionssystems geschlossen werden. Dabei kann beispielsweise die Dichte von Weltraummüll und/oder die Zusammensetzung von Weltraummüll aus verschiedenen Unterarten erkannt werden.

Eine Dichte von Weltraummüll kann alternativ ohne ergänzende Messverfahren ermittelt werden, sofern die Detektionseinrichtung die Detektionsfläche bzw. Teilbereiche der Detektionsfläche in definierten zeitlichen Abständen abscannt und/oder mit konstanter Geschwindigkeit relativ zu der Detektionsfläche verlagert wird.

Vorteilhafte Weiterbildungen der Erfindung ergeben sich aus den Patentansprüchen, der Beschreibung und der Zeichnung.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind der Zeichnung - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die gegebenenfalls in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand eines in der Figur dargestellten bevorzugten Ausführungsbeispiels weiter erläutert und beschrieben.

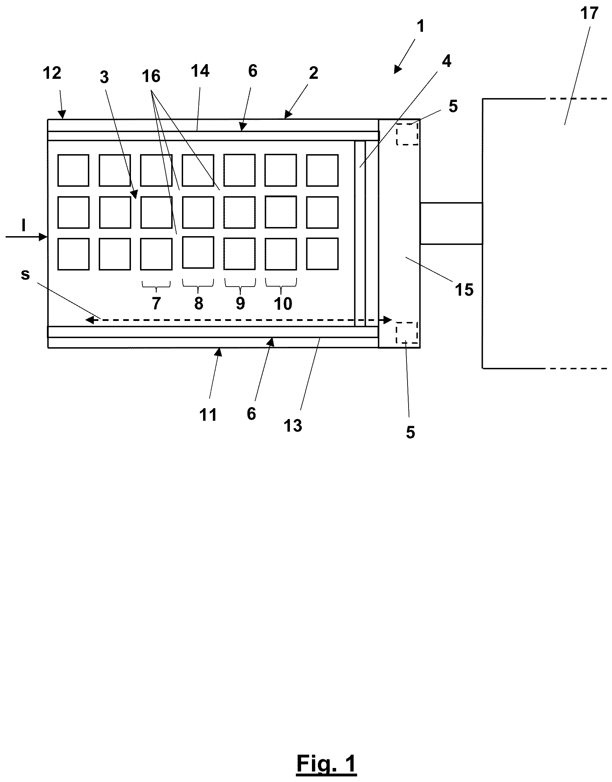

- **Fig. 1**: zeigt einen Weltraumflugkörper mit einem Detektionssystem zur Detektion von Weltraummüll.

### FIGURENBESCHREIBUNG

**Fig. 1** zeigt einen Weltraumflugkörper 17, welcher beispielsweise ein Raumfahrzeug, Teil eines Raumfahrzeugs, ein Satellit oder ähnliches sein kann.

Zur Energieversorgung weisen derartige Weltraumflugkörper 17 regelmäßig Solarpaneele mit einer Vielzahl von nebeneinander und hintereinander angeordneten Solarzellen auf, die Strahlungsenergie in elektrische Energie umwandeln. Ein solches Solarpaneel wird hier als ein Detektionskörper 2 eines Detektionssystems 1 zum Detektieren von Weltraummüll im Weltall genutzt, neben seiner eigentlichen Aufgabe der Energieversorgung.

Obwohl der Detektionskörper 2 gemäß dem Ausführungsbeispiel ein Solarpaneel ist, ist die Erfindung nicht darauf beschränkt. Alternative Ausführungsbeispiele können als Detektionskörper 2 andere, insbesondere großflächige, Komponenten verwenden, wie beispielsweise Antennen, Spiegel, Tragflächen oder andere.

Das hier den Detektionskörper 2 des Detektionssystems 1 bildende Solarpaneel weist eine mit Solarzellen ausgestattete Oberfläche auf, welche die Detektionsfläche 3 des Detektionssystems 1 darstellt.

Die Detektionsfläche 3 weist ein Array von in Zeilen und Spalten regelmäßig angeordneten Solarzellen auf. Exemplarisch sind pro Zeile lediglich drei Solarzellen und pro Spalte lediglich sieben Solarzellen dargestellt. Es versteht sich, dass die Oberfläche des Solarpaneels üblicherweise nahezu vollständig mit Solarzellen bedeckt ist. Für eine bessere Erkennbarkeit und Erläuterung sind hier jedoch nur einige der Solarzellen dargestellt.

Die Solarzellen weisen identische Größen und eine regelmäßige Anordnung auf. Zudem sind diese zueinander beabstandet, wodurch gitterförmige Zwischenräume entstehen, deren Kreuzungspunkte als Positionsmarkierungen 16 auf der Detektionsfläche 3 dienen.

Die Detektionsfläche 3 weist ein sprödes Material wie beispielsweise Silizium auf. Darin werden Beschädigungen durch mit der Detektionsfläche 3 kollidierende Weltraummüllteilchen optisch besonders gut sichtbar. Ein durch ein einschlagendes Weltraummüllteilchen erzeugter Einschlagskrater kann einen Kraterdurchmesser aufweisen, der in etwa 10 bis 20mal größer als das einschlagende Teilchen selbst ist. Somit können insbesondere auch Teilchen detektiert werden, welche nur wenige Zentimeter groß oder sogar kleiner als 1 cm sind.

Zur Detektion von optischen Oberflächeninformationen der Detektionsfläche 3 und damit auch Detektion von Beschädigungen der Detektionsfläche 3 und Identifikation von Weltraummüllteilchen weist das Detektionssystem 1 eine hier an dem Detektionskörper 2 angeordnete Detektionseinrichtung 4 auf. Alternativ könnte die Detektionseinrichtung 4 an einem zu dem Detektionskörper 2 benachbarten anderen Teilbereich des Weltraumflugkörpers 17 angeordnet sein.

Die Detektionseinrichtung 4 weist hier einen quer zu einer Längserstreckung l der Detektionsfläche 3 orientierten Zeilensensor auf. Dieser kann beispielsweise ein CCD-Sensor, ein CMOS-Sensor oder eine Diodenzeile sein. Die Detektionseinrichtung 4 ist jedoch nicht auf eine einzige Sensorzeile beschränkt, sondern kann alternativ ein Detektionsarray mit mehreren Zeilen aufweisen.

Die Detektionseinrichtung 4 ist mittels einer Antriebseinrichtung 5 des Detektionssystems 1 relativ zu der Detektionsfläche 3 verlagerbar, nämlich in zwei entgegengesetzte durch den Doppelpfeil mit der Bezugsziffer s angedeutete Richtungen. Zur Führung der Verlagerungsbewegung der Detektionseinrichtung 4 weist der Detektionskörper 2 an gegenüberliegenden Randbereichen 11, 12 Führungselemente 13, 14, nämlich hier parallel zueinander orientierte Führungsschienen, auf, an welchen die Detektionseinrichtung 4 hin und her geschoben werden kann.

Die Antriebseinrichtung 5 weist hier beispielsweise zwei Linearschrittmotoren (andere Arten von Motoren/Aktoren sind ebenso möglich) auf, welche jeweils einem der Führungselemente 13, 14 zugeordnet sind. Alternativ kann den Führungselementen 13, 14 ein gemeinsamer Schrittmotor der Antriebseinrichtung 5 zugeordnet sein. Die Schrittmotoren verlagern jeweils einen an dem zugeordneten Führungselement 13, 14 laufenden Schlitten (nicht näher dargestellt), der einen jeweiligen Endbereich der Detektionseinrichtung 4 trägt. Die Ansteuerung der beiden Schrittmotoren der Antriebseinrichtung 5 erfolgt synchron, so dass die Detektionseinrichtung 4 ohne Verkanten entlang der beiden Führungselemente 13, 14 und relativ zu der Detektionsfläche 3 verlagert werden kann.

Während der Verlagerung fährt die Detektionseinrichtung 4 über aufeinanderfolgende Flächenteilbereiche 7, 8, 9, 10 der Detektionsfläche 3, welche hier jeweils beispielhaft als in Längserstreckung l der Detektionsfläche 3 aufeinanderfolgende Solarzellen-Zeilen dargestellt sind. Jeder Flächenteilbereich 7, 8, 9, 10 weist hier drei parallel zu der Zeilenrichtung des Zeilensensors der Detektionseinrichtung 4 hintereinander angeordnete Solarzellen auf.

Die entlang der Führungselemente 13, 14 verlagerte Detektionseinrichtung 4 kann die Detektionsfläche 3 des Detektionskörpers 2 somit nach der Art eines Flachbettscanners abscannen und optische Oberfächeninformationen der Detektionsfläche 3 detektieren.

Um die Erkennbarkeit von Einschlägen auf der Detektionsfläche 3 zu verbessern, kann die Detektionseinrichtung 4 zusätzlich einen hier nicht weiter dargestellten Spektralfilter und/oder eine Abschirmeinrichtung zur Abschirmung von Umgebungslicht und/oder eine Beleuchtungseinrichtung aufweisen, die die Detektionsfläche beispielsweise mit Licht unterschiedlicher Wellenlängen und/oder aus unterschiedlichem Einfallsrichtungen beleuchten kann. Dies kann gegebenenfalls den Kontrast der aufgenommenen Daten verbessern.

Während der Verlagerung der Detektionseinrichtung 4 werden die aufgezeichneten Daten von der Detektionseinrichtung 4 an eine hier nicht dargestellte Recheneinrichtung des Detektionssystems 1 übermittelt. Gleichzeitig übermittelt beispielsweise zumindest einer der Schrittmotoren der Antriebseinrichtung 5 eine Information über eine aktuelle Position der Detektionseinrichtung 4 an die Recheneinrichtung. Darüber hinaus kann die Detektionseinrichtung 4 die Positionsmarkierungen 16 auf der Detektionsfläche 3 (und gegebenenfalls zusätzliche Strukturen wie eine Verdrahtung der Solarzellen) detektieren und diese an die Recheneinrichtung übermitteln.

Um unterschiedliche Positionen auf der Detektionsfläche 3 noch zusätzlich mit einem kleineren Raster versehen zu können, kann es vorgesehen sein, dass die Detektionsfläche 3 eine oder mehrere Skalen und/oder eine oder mehrere weitere Positionsmarkierungen 16 zur Definition von Orten auf der Detektionsfläche 3 aufweist. Dies ist insbesondere vorteilhaft, wenn die Antriebseinrichtung 5 keinen Schrittmotor und/oder eigenen Inkrementalgeber aufweist.

Auf der Basis der empfangenen Daten ist es der Recheneinrichtung möglich, für jeden Zeitpunkt während der Verlagerung der Detektionseinrichtung 4 eine Position der Detektionseinrichtung 4 mit den detektierten optischen Daten zu korrelieren. Daraus kann die Recheneinrichtung einen kompletten Datensatz der Detektionsfläche 3 erstellen, der einem Nutzer beispielsweise als Bild der Detektionsfläche 3 angezeigt werden kann.

Während der Aufnahme der optischen Oberflächeninformationen durch die Detektionseinrichtung 4 kann die Detektionseinrichtung gemäß einer möglichen Ausführungsform kontinuierlich in Verlagerungsrichtung s verlagert werden. Eine alternative Ausführungsform kann vorsehen, dass die Antriebseinrichtung an bestimmten Orten oder zu bestimmten Zeitpunkten stoppt, so dass die Detektionseinrichtung 4 nicht verlagert wird und während eines Stillstands Daten detektieren kann. Insbesondere kann die Detektionsfläche 3 somit intervallartig abgescannt werden, wobei die Detektionseinrichtung 4 in bestimmten Zeitabständen stoppt und in bestimmten Zeitabschnitten zu einem nachfolgenden Flächenteilbereich 7, 8, 9, 10 verlagert wird.

Alternativ oder zusätzlich ist möglich, dass die Antriebseinrichtung 5 abhängig von dem Eintreten eines vordefinierten Ereignisses gesteuert wird, beispielsweise wenn ein zusätzlicher Sensor, beispielsweise ein ergänzender Piezosensor, eine Spannung detektiert, der auf einen Einschlag von Weltraummüll schließen lässt.

Sofern die Detektionseinrichtung 4 insbesondere länger nicht benötigt wird, kann diese unter eine Schutzabdeckung 15 verlagert werden, welche sich an einem randseitigen Ort der Detektionsfläche 3 befindet, dort wo die Führungseinrichtung 6 einen Anschlag für die Detektionseinrichtung 4 bereitstellt und eine Endposition für die Verlagerung markiert.

Dargestellt ist hier nur eine Schutzabdeckung 15. Denkbar ist jedoch beispielsweise, dass die Führungseinrichtung 6 an beiden gegenüberliegenden Endbereichen eine solche Schutzabdeckung 15 aufweist.

### BEZUGSZEICHENLISTE

- 1: Detektionssystem
- 2: Detektionskörper
- 3: Detektionsfläche
- 4: Detektionseinrichtung
- 5: Antriebseinrichtung
- 6: Führungseinrichtung
- 7: Flächenteilbereich
- 8: Flächenteilbereich
- 9: Flächenteilbereich
- 10: Flächenteilbereich
- 11: Randbereich
- 12: Randbereich
- 13: Führungselement
- 14: Führungselement
- 15: Schutzabdeckung
- 16: Positionsmarkierung
- 17: Weltraumflugkörper

- l: Längserstreckung
- s: Verlagerungsrichtung

## Patentansprüche

1. Detektionssystem (1) zur Erfassung von Weltraummüll, wobei das Detektionssystem (1) einen Detektionskörper (2) mit einer sich bei Kollisionen mit Weltraummüll verändernden Detektionsfläche (3) und eine Veränderungen der Detektionsfläche (3) optisch erfassende Detektionseinrichtung (4) aufweist, wobei das Detektionssystem (1) eine Antriebseinrichtung (5) und eine Führungseinrichtung (6) aufweist, wobei die Antriebseinrichtung (5) eingerichtet ist, um die Detektionseinrichtung (4) an und entlang der Führungseinrichtung (6) relativ zu der Detektionsfläche (3) zu verlagern, um während der Verlagerung einen Erfassungsbereich der Detektionseinrichtung (4) zeitlich nacheinander auf in eine Verlagerungsrichtung (s) aufeinanderfolgende Flächenteilbereiche (7, 8, 9, 10) der Detektionsfläche (3) zu richten, **dadurch gekennzeichnet, dass** der Detektionseinrichtung (4) ein Spektralfilter und/oder eine Abschirmeinrichtung zur Abschirmung von Umgebungslicht und/oder eine Beleuchtungseinrichtung zum Beleuchten der Detektionsfläche, insbesondere mit Licht unterschiedlicher Wellenlängen und/oder aus unterschiedlichen Einfallsrichtungen, zugeordnet ist.

2. Detektionssystem (1) nach Anspruch 1, **wobei** die Führungseinrichtung (6) an dem Detektionskörper (2) angeordnet ist.

3. Detektionssystem (1) nach Anspruch 1 oder 2, **wobei** die Führungseinrichtung (6) zwei gegenüberliegenden Randbereichen (11, 12) des Detektionskörpers (2) zugeordnete Führungselemente (13, 14) aufweist, entlang und zwischen welchen die Detektionseinrichtung (4) verfahrbar ist.

4. Detektionssystem (1) nach einem der vorhergehenden Ansprüche, **wobei** die Antriebseinrichtung (5) ein Linearmotor, bevorzugt ein Linearschrittmotor, ist.

5. Detektionssystem (1) nach einem der vorhergehenden Ansprüche, **wobei** die Detektionseinrichtung (4) einen Zeilensensor, insbesondere einen CCD-Sensor oder CMOS-Sensor, aufweist, der quer zu seiner Längserstreckung (I) relativ zu der Detektionsfläche (3) verlagerbar ist.

6. Detektionssystem (1) nach einem der vorhergehenden Ansprüche, **wobei** das Detektionssystem (1) eine der Detektionseinrichtung (4) zugeordnete Schutzabdeckung (15) aufweist, unter welche die Detektionseinrichtung (4), insbesondere bei Nichtgebrauch, verlagerbar ist.

7. Detektionssystem (1) nach einem der vorhergehenden Ansprüche, **wobei** der Detektionskörper (2), insbesondere die Detektionsfläche (3), eine Skala und/oder Positionsmarkierung (16) zur Definition eines Ortes auf der Detektionsfläche (3) aufweist.

8. Detektionssystem (1) nach einem der vorhergehenden Ansprüche, **wobei** der Detektionskörper (1) ein Solarpaneel ist.

9. Weltraumflugkörper (17), insbesondere Satellit, mit einem Detektionssystem (1) zur Detektion von Weltraummüll, **dadurch gekennzeichnet, dass** das Detektionssystem (1) nach einem der vorhergehenden Ansprüche ausgebildet ist.

10. Verfahren zur Detektion von Weltraummüll mittels eines Detektionssystems (1), insbesondere mittels eines nach einem der Ansprüche 1 bis 9 ausgebildeten Detektionssystems (1), wobei eine Detektionseinrichtung (4) eine durch eine Kollision mit Weltraummüll hervorgerufene Veränderung einer Detektionsfläche (3) eines Detektionskörpers (2) detektiert, wobei die Detektionseinrichtung (4) mittels einer Antriebseinrichtung (5) an und entlang einer Führungseinrichtung (6) relativ zu der Detektionsfläche (3) verlagert wird, insbesondere mittels eines Schrittmotors verlagert wird, wobei die Detektionseinrichtung (4) zeitlich nacheinander optische Oberflächeninformationen von in eine Verlagerungsrichtung (s) der Detektionseinrichtung (4) aufeinanderfolgenden Flächenteilbereichen (7, 8, 9, 10) der Detektionsfläche (3) erfasst. **dadurch gekennzeichnet, dass** von der Detektionseinrichtung (4) zu erfassende Oberflächeninformationen mittels eines Spektralfilters gefiltert werden und/oder Umgebungslicht mittels einer Abschirmeinrichtung abgeschirmt wird und/oder die Detektionsfläche (3) mittels einer Beleuchtungseinrichtung beleuchtet wird, insbesondere mit Licht unterschiedlicher Wellenlängen und/oder aus unterschiedlichen Einfallsrichtungen.

11. Verfahren nach Anspruch 10, **wobei** eine Recheneinrichtung des Detektionssystems (1) eine von der Detektionseinrichtung (4) detektierte Oberflächeninformation empfängt und einem Detektion der Oberflächeninformation anhand eines empfangenen Positionssignals eines Schrittmotors der Antriebseinrichtung (5) und/oder einer der Detektionsfläche (3) zugeordneten Skala und/oder Positionsmarkierung (16) ermittelt wird.

12. Verfahren nach Anspruch 10 oder 11, **wobei** die Detektionseinrichtung (4) kontinuierlich, in vordefinierten zeitlichen Abständen oder situativ durch ein vordefiniertes Ereignis ausgelöst entlang der Detektionsfläche (3) verlagert wird, wobei die Detektionseinrichtung (4) bei Nichtgebrauch insbesondere unter eine Schutzabdeckung (15) verlagert wird.
